# EUROPÄISCHE PATENTSCHRIFT

(11) **EP 2 071 940 B1**
(45) Veröffentlichungstag und Bekanntmachung des Hinweises auf die Patenterteilung: **29.01.2014**
(21) Anmeldenummer: 08021607.0
(22) Anmeldetag: 12.12.2008
(51) Int. Cl.: A01G 25/09

(54) **Vorrichtung zum Transportieren und Ausbringen von Fluessigkeit**
Device for transporting and deploying liquid
Dispositif destiné au transport et à l'extraction de liquide

(30) Priorität: 18.12.2007 DE 202007017782 U
(43) Veröffentlichungstag der Anmeldung: 24.06.2009
(73) Patentinhaber: AL-KO Kober AG, 89359 Kötz (DE)
(72) Erfinder: de Filippo, Antonio, 73342 Bad Ditzenbach (DE)
(74) Vertreter: Binder, Armin

(56) Entgegenhaltungen:
- DE-U1- 29 511 629
- DE-U1- 29 908 357
- FR-A- 2 197 510
- US-A- 3 797 743
- US-A1- 2003 080 161

## Beschreibung

Die Erfindung betrifft eine Vorrichtung zum Transportieren und Ausbringen von Flüssigkeit, insbesondere von Wasser zum Gießen, aufweisend einen Behälter zur Aufnahme der Flüssigkeit, ein Gehäuse, welches zumindest eine elektrische Pumpe und eine Speichereinheit für Elektrizität aufnimmt, zwei tragende koaxial angeordnete Laufräder und eine Griffeinheit zum Schieben und Ziehen der Vorrichtung.

Eine ähnliche Vorrichtung ist bereits aus dem Deutschen Gebrauchsmuster DE 295 11 629 U1 bekannt. Eine andere ähnliche Vorrichtung ist auch aus dem DE-29908357 U bekannt.

Zusätzlich ist aus der französischen Druckschrift FR-A-2 197 510 eine Vorrichtung zum Versprühen von Flüssigkeiten mit einer Griffeinheit und einem Transportbehälter bekannt, wobei die hier beschriebene Griffeinheit an der Unterseite des Behälters derart befestigt ist, dass diese in einem schrägen Winkel von dem Behälter wegsteht und von den Konturen des Behälters beabstandet ist, wodurch nur eine sehr instabile Befestigung der Griffeinheit an der Unterseite des Behälters erreicht wird.

Es ist Aufgabe der Erfindung eine verbesserte Vorrichtung dieser Art zu beschreiben.

Diese Aufgabe wird durch die Merkmale des unabhängigen Patentanspruches 1 gelöst. Vorteilhafte Weiterbildungen der Erfindung sind Gegenstand untergeordneter Ansprüche.

Die Erfinder haben erkannt, dass eine Verbesserung der an sich bekannten Vorrichtung - gemäß dem Oberbegriff des Patentanspruches 1 - dadurch möglich ist, dass der Behälter und das Gehäuse eine kompakte Raumeinheit bilden und die Griffeinheit die Kontur der Rückseite und der Unterseite dieser Raumeinheit umfasst, indem sie sich an die Kontur der Raumeinheit auf zwei Seiten anschmiegt. Durch die Ausformung von Behälter und Gehäuse als kompakte Raumeinheit wird der Schwerpunkt nach unten verlagert, die Griffeinheit kann diese Raumeinheit besser umfassen, so dass weniger Spannung an den Befestigungspunkten der Griffeinheit an der Raumeinheit auftreten und dadurch eine bessere Haltbarkeit der gesamten Vorrichtung erreicht wird.

Vorteilhaft bei dieser Ausbildung ist es, wenn der Behälter oberhalb des Gehäuses angeordnet ist, vorzugsweise das Gehäuse von oben hin vollständig abdeckt. Auch durch diese Maßnahme wird eine besonders kompakte Bauweise ermöglicht.

Bezüglich der Bauweise der Vorrichtung schlagen die Erfinder vor, die koaxiale Achse der Laufräder tiefer als den Schwerpunkt der Raumeinheit im gefüllten Zustand des Behälters anzuordnen. Vorteilhaft ist es hierbei, wenn sich die koaxiale Achse der Laufräder zwischen dem Lot des Schwerpunktes der Raumeinheit im gefüllten Zustand des Behälters und der Rückseite der Raumeinheit befindet. Hierdurch wird ein besonders guter Stand der Vorrichtung beim Abstellen der Vorrichtung gewährleistet.

Weiterhin ist es besonders günstig, wenn die Laufräder einen solchen Radius aufweisen und die Ausdehnung der Raumeinheit derart gestaltet ist, dass sich der Schwerpunkt der Raumeinheit im gefüllten Zustand des Behälters in einem Abstand von der koaxialen Achse der Laufräder befindet, der maximal dem zweifachen Radius, vorzugsweise maximal dem 1,5-fachen Radius, entspricht.

Weiterhin wird vorgeschlagen, dass die Raumeinheit eine Gesamthöhe ohne Griffeinheit aufweist, die das 4-fache, vorzugsweise das 3-fache, des Radius der Laufräder nicht überschreitet.

Durch diese oben genannten Maßnahmen wird erreicht, dass die Vorrichtung sehr kompakt ausfällt und sicher und ohne Kipptendenz abstellbar ist, insbesondere auch auf etwas schrägem Boden. Außerdem ist das Handling einer derart ausgestalteten Vorrichtung beim Ziehen wesentlich günstiger als bei einer Vorrichtung, die ihr gesamtes Gewicht über eine größere Ausdehnung, insbesondere in Richtung der Griffeinheit, verteilt.

Bezüglich der Griffeinheit wird vorgeschlagen, dass diese ein Rohrgestänge aufweist, vorzugsweise kann diese aus zwei, am besten U-förmig miteinander verbundenen Holmen bestehen. Eine solche Griffeinheit kann einklappbar ausgebildet sein oder auch, gegebenenfalls zusätzlich, teleskopierbar ausgestaltet sein.

Hierdurch kann die ohnehin schon sehr kompakt ausgebildete Vorrichtung für den Transport problemlos zusammengeklappt beziehungsweise zusammengeschoben werden, so dass auch in kleinen Autokofferräumen ein einfacher Transport der Vorrichtung möglich ist.

Des Weiteren schlagen die Erfinder vor, dass die Griffeinheit eine Halterung für eine Gießbrause oder einen Gießbrausestab aufweisen kann. An dieser Griffeinheit kann auch ein Schalter für die Pumpe der Vorrichtung vorgesehen werden, insbesondere kann dieser in die Halterung der Gießbrause oder des Gießbrausestabes integriert werden.

Die im Gehäuse befindliche Pumpe kann einerseits als direkt fördernde Flüssigkeitspumpe ausgebildet werden. Es besteht jedoch auch die Möglichkeit, diese Pumpe als Luftpumpe auszugestalten. Im Fall der Ausgestaltung der Pumpe als Flüssigkeitspumpe, kann diese die im Flüssigkeitsbehälter aufbewahrte Flüssigkeit direkt, zum Beispiel über einen Spiralschlauch, an eine Gießbrause oder einen Gießbrausestab fördern, über den dann die Flüssigkeit ausgebracht wird.

Wird eine Luftpumpe verwendet, so kann diese einen Überdruck im Behälter aufbauen, so dass mit Hilfe des dort befindlichen Überdruckes die Flüssigkeit nach außen gefördert werden kann.

In einer besonderen Ausgestaltung der Flüssigkeits- beziehungsweise Luftpumpe wird vorgeschlagen, diese sowohl als Saug- und Druckpumpe auszubilden. Hierbei kann durch Umkehr der Förderrichtung entweder der zum Ausbringen der Flüssigkeit vorgesehene Schlauch auch zum Zapfen von Flüssigkeit, beispielsweise aus einem Regenbehälter oder einem Teich oder ähnlichen Vorratsbehältern, genutzt werden. Selbstverständlich ist es auch möglich, mit Hilfe einer Umschaltung einen separaten Zapfschlauch anzuschließen, über den die aufzunehmende Flüssigkeit in den Behälter gefördert werden kann.

Der Behälter kann fest mit dem Gehäuse verbunden sein. Es besteht jedoch auch die Möglichkeit, den Behälter abnehmbar auszubilden, womit dann eine einfache Aufnahme von Flüssigkeit in den Behälter, zum Beispiel bei einem Wasserhahn, möglich wird.

Erfindungsgemäß kann der Behälter aus einem Thermoplast bestehen und durch Blastechnik hergestellt werden. Der Behälter kann neben der Blastechnik auch durch ein Rotationsverfahren hergestellt werden. Dabei wird Kunststoffgranulat in eine erhitzte und in Rotation versetzt Aluminium-Form eingebracht, das Granulat lagert sich an der Form ab und schmilzt, so dass ein geschlossener Körper entsteht.

Das Gehäuse kann vorzugsweise ebenfalls aus Thermoplast bestehen und kann entsprechend seiner Ausbildung durch Spritzgusstechnik oder durch eine Tiefziehtechnik produziert werden.

Bezüglich der elektrischen Versorgung schlagen die Erfinder vor, dass die Speichereinheit für Elektrizität ein Akku ist. Vorzugsweise kann der Behälter selbst ein Ladegerät für diesen Akku aufweisen und es besteht die Möglichkeit, einen entsprechenden Anschluss zum Anschließen des Ladegerätes vorzusehen, damit ein solch "fliegendes" Ladegerät angeschlossen werden kann.

Eine alternative Möglichkeit besteht darin, eine Brennstoffzelle vorzusehen, welche den Akku bei Bedarf auflädt. Hierdurch wird das gesamte System auch für eine längere Dauer unabhängig von einem externen Stromanschluss und es reicht die Brennstoffzelle mit einem entsprechenden Treibstoff zu füllen. Eine weitere Alternative besteht darin, den Akku mit Hilfe einer Solarzelle, die vorzugsweise an der Vorrichtung selbst angebracht ist, aufzuladen. Voraussetzung hierfür ist allerdings, dass die Vorrichtung über längere Zeit entsprechend in Sonneneinstrahlungs-Richtung positioniert wird.

Schließlich besteht auch die Möglichkeit, die Speichereinheit für Elektrizität ausschließlich als Brennstoffzelle auszuführen. Hierdurch wird ein empfindlicher Akku eingespart, wobei allerdings die Brennstoffzelle eine ausreichende Kapazität aufweisen muss, um die Pumpe im direkten Anschluss zu betreiben.

Die erfindungsgemäße Vorrichtung kann zusätzlich oberhalb des Behälters mit einem Sitz versehen werden, wobei entweder der Behälter selbst auf der Oberseite als Sitzfläche ausgebildet wird oder ein Sitz, vorzugsweise klappbar, an der Griffeinheit angebracht wird.

Insbesondere, wenn die Vorrichtung mit einem Sitz versehen ist, kann es besonders vorteilhaft sein, wenn die Laufräder federnd gelagert ausgeführt werden und mit einer Reibbremse versehen sind, die im eingefederten Zustand wirkt. Dies verhindert, dass, wenn eine Person sich auf dem Sitz der Vorrichtung setzt, ein ungewolltes Davonrollen der Vorrichtung geschieht. Wichtig ist hierbei allerdings, dass die Federung derart gemessen wird, dass diese nicht bereits im gefüllten Zustand des Behälters zu stark einfedert, sondern dass die Einfederung erst bei der Belastung mit einer Person soweit geht, dass die Laufräder durch die Reibbremse, dies kann auch die Radabdeckung sein, gebremst werden.

Eine vorteilhafte Ausbildung der Vorrichtung kann auch darin bestehen, dass an der Griffeinheit ein Netz oder ein Korb zur Aufnahme von Utensilien angebracht ist.

Das Gehäuse kann eine Klappe aufweisen, durch welche die im Gehäuse befindlichen Funktionselemente, wie beispielsweise Pumpe, Akku, Brennstoffzelle, etc., problemlos zugänglich sind.

Soll die erfindungsgemäße Vorrichtung nicht nur zum einfachen Gießen mit Wasser oder zum Gießen mit vorgemischten Flüssigkeiten verwendet werden, so ist es vorteilhaft, wenn eine zusätzliche Dosiereinrichtung mit einem Vorratsbehälter vorgesehen ist, welche das geförderte Gießwasser automatisch beim Ausbringen mit einer Zusatzsubstanz, zum Beispiel einem Düngemittel oder einem Pflanzenschutzmittel, anreichert. Auf diese Weise kann der Nutzer der Vorrichtung entscheiden, ob beim Ausbringen der Flüssigkeit aus dem Vorratsbehälter zusätzlich ein Düngemittel oder ein sonstiges Zusatzmittel hinzudosiert werden soll, oder ob lediglich der reine Inhalt des Vorratsbehälters ausgebracht wird. Eine solche Dosiervorrichtung kann daher ein- und ausschaltbar ausgeführt werden und es besteht auch die Möglichkeit, vorteilhaft diese Dosiervorrichtung variabel einstellbar auszuführen, so dass die Dosierung des Zusatzmittels beliebig eingestellt werden kann.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind. Hierbei werden die folgenden Bezugszeichen und Kurzbezeichnungen verwendet: 1: Vorrichtung zum Transportieren und Ausbringen von Flüssigkeit; 2: Griffeinheit; 2.1: Oberteil der Griffeinheit; 2.2: Unterteil der Griffeinheit; 3: Behälter; 3.1: Behälterdeckel; 3.2: Behältereinfüllöffnung; 4: Gehäuse; 4.1: Gehäusedeckel; 5: Laufräder; 5.1: Laufradachse; 6: Spiralschlauch; 7: Brausegriff; 8: Halterung; 9: Ein-/Ausschalter; 10: Pumpe; 11: Akku; 12: Einsatzteil.

Es zeigen im Einzelnen:
- FIG 1:: 3-D-Schrägansicht;
- FIG 2:: seitlicher Schnitt;
- FIG 3:: Explosionsdarstellung;
- FIG 4:: weitere 3-D-Schrägansicht.

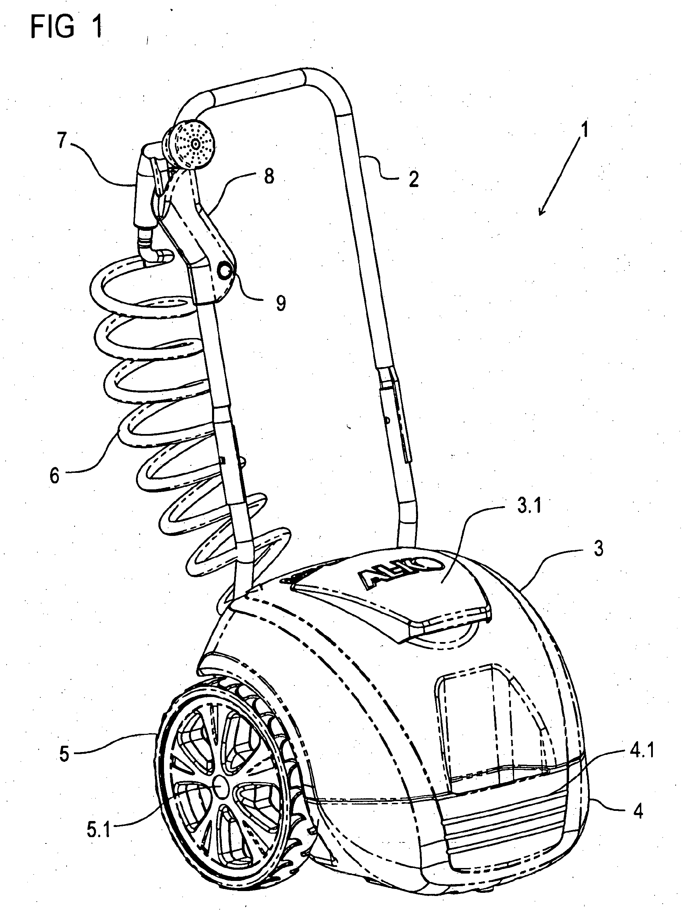

Die **Figur 1** zeigt eine bevorzugte Ausführungsform der erfindungsgemäßen Vorrichtung zum Transportieren und Ausbringen von Flüssigkeit mit einem Behälter 3, der mit einem darunter liegenden Gehäuse 4 zu einer kompakten Raumeinheit verbunden ist. An dieser Raumeinheit, aus Gehäuse 4 und Behälter 3, sind zwei Laufräder 5 über eine Laufradachse 5.1 gelagert. Die Raumeinheit wird auf der Rückseite und Unterseite durch eine Griffeinheit 2 an der Rückseite und Unterseite umfasst. Die Griffeinheit 2 besteht aus einer Rohrkonstruktion, die in der Frontansicht U-förmig ausgebildet ist und in der Seitenansicht etwa L-förmig ausgebildet ist, wobei die L-Schenkel die Raumeinheit, bestehend aus Gehäuse 4 und Behälter 3, entsprechend umfassen und damit eine stabile Verbindung zwischen der Griffeinheit 2 und Raumeinheit bilden.

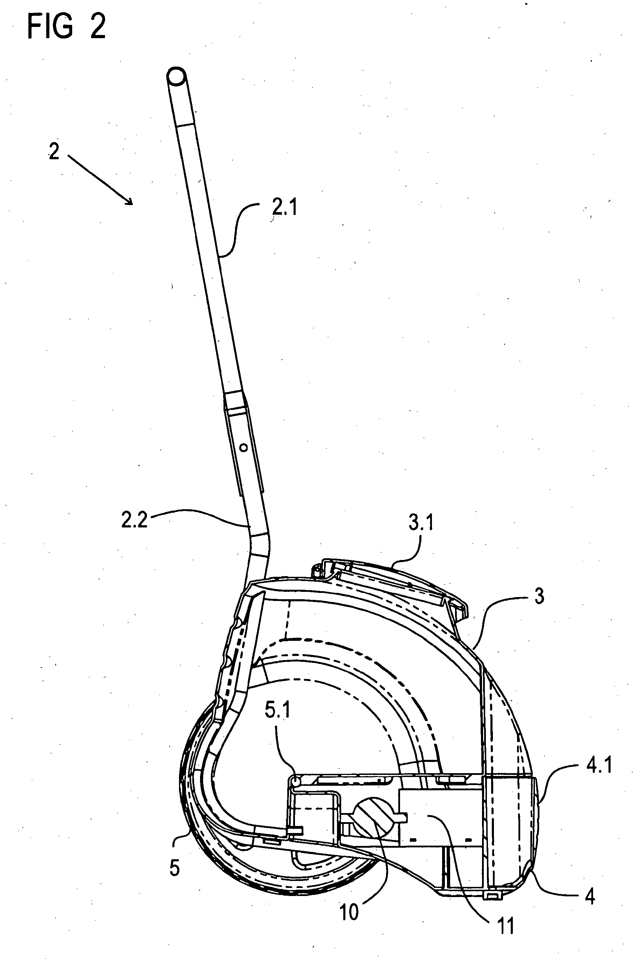

An der Griffeinheit 2 befindet sich eine Halterung 8 mit einem integrierten Ein-/Ausschalter 9 zum Ein- und Ausschalten der hier nicht sichtbaren Flüssigkeitspumpe. Die Flüssigkeitspumpe ist einerseits mit dem Innenraum des Behälters 3 verbunden und auf der anderen Seite mit einem Spiralschlauch 6 verbunden, der zu einem Brausegriff 7 führt, der an der Halterung eingesteckt werden kann. Im oberen Bereich der Griffeinheit 2, vorzugsweise in der Halterung 8, kann auch ein Anschluss zum Laden des Akkus 11 (siehe Figur 2) und/oder eine Ladestandsanzeige des Akkus, gegebenenfalls einschließlich Elektronik hierzu, angebracht werden. Vorteilhaft daran ist, dass sich die wasserempfindliche Elektronik weit oberhalb des Flüssigkeitsbehälters befindet und damit weniger Gefahr von Korrosion besteht.

Diese Vorrichtung ist in der **Figur 2** in Seitenansicht gezeigt. Hier ist die zweiteilige Ausführung der Griffeinheit 2 in ein Oberteil 2.1 und ein Unterteil 2.2 gut erkennbar, wobei das Unterteil 2.2 sich an die Kontur der Raumeinheit, bestehend aus Gehäuse 4 und Behälter 3, auf zwei Seiten anschmiegt. Im Schnitt sind auch die Laufräder 5 mit der koaxialen Laufräderachse 5.1 erkennbar. Im Innenraum des Gehäuses 4 befindet sich eine Elektropumpe 10, gespeist von einem Akku 11, wodurch die Flüssigkeit unabhängig von externen Stromquellen aus dem Behälter 3 ausgebracht werden kann. Zum Nachfüllen des Behälters kann hier der Behälterdeckel 3.1 aufgeklappt beziehungsweise aufgeschraubt werden, wodurch eine große Behälteröffnung frei wird, in die bequem Flüssigkeit eingefüllt werden kann. Auf der Vorderseite des Gehäuses 4 befindet sich ein Gehäusedeckel 4.1, der eine problemlose Zugänglichkeit des Akkus beziehungsweise der Pumpe ermöglicht. An der Rückseite des Gehäuses 4 und des Behälters 3 sind Aussparungen erkennbar, in welchen die Griffeinheit 2 versenkt verläuft.

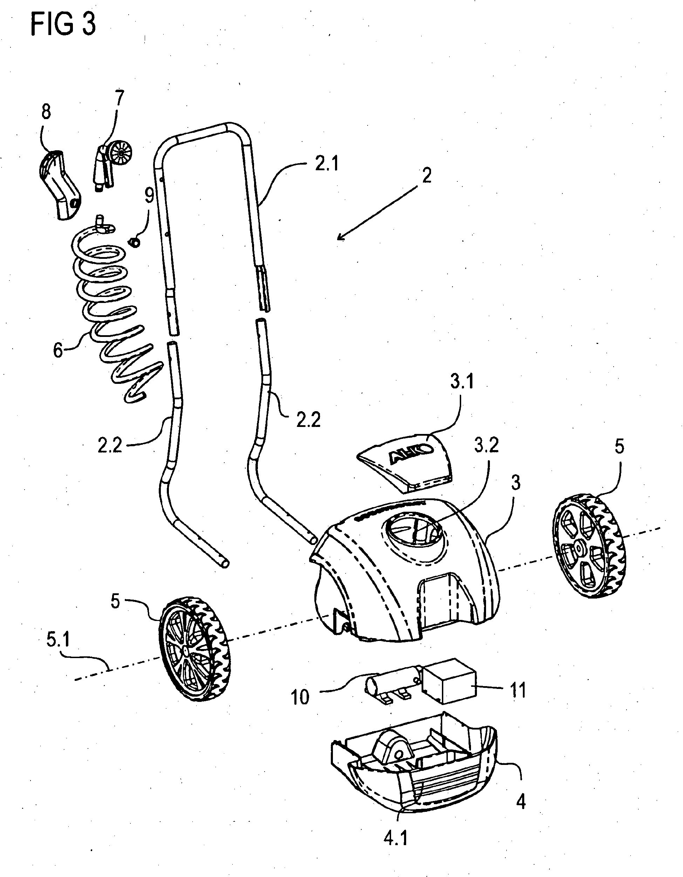

Diese Vorrichtung ist zusätzlich nochmals als Explosionszeichnung in der **Figur 3** dargestellt. Diese zeigt von unten nach oben zunächst das Gehäuse 4 mit dem Gehäusedeckel 4.1. Weiterhin die Flüssigkeitspumpe 10 mit dem daneben angeordneten Akku 11, die im Gehäuse 4 untergebracht sind. Darüber ist der Behälter 3 mit dem Behälterdeckel 3.1 und der Behältereinfüllöffnung 3.2 gezeigt. Seitlich des Behälters 3 befinden sich die Laufräder 5 mit der angedeuteten koaxialen Achse 5.1. Dahinter wird die Griffeinheit 2 gezeigt, die aus einem U-förmigen Oberteil 2.1 und zwei damit verbindbaren Unterteilen 2.2, die etwa L-förmig ausgebildet sind, besteht. Die unteren L-förmig ausgebildeten Elemente der Griffeinheit umfassen einerseits die Rückseite des Behälters 3 und die Unterseite des Gehäuses 4. Hierdurch wird eine sehr stabile Verbindung zwischen der Raumeinheit, bestehend aus Behälter 3 und Gehäuse 4, erzeugt, so dass auch größere Lasten durch diese Griffeinheit bewältigt werden können.

Des Weiteren ist der Spiralschlauch 6 dargestellt, der von dem Auslass der Pumpe 10 zum Brausegriff 7 führt. Auch die Halterung 8, die an der Griffeinheit 2 angebracht wird, ist zusammen mit dem Ein-/Ausschalter 9, der in die Halterung 8 integriert wird, dargestellt.

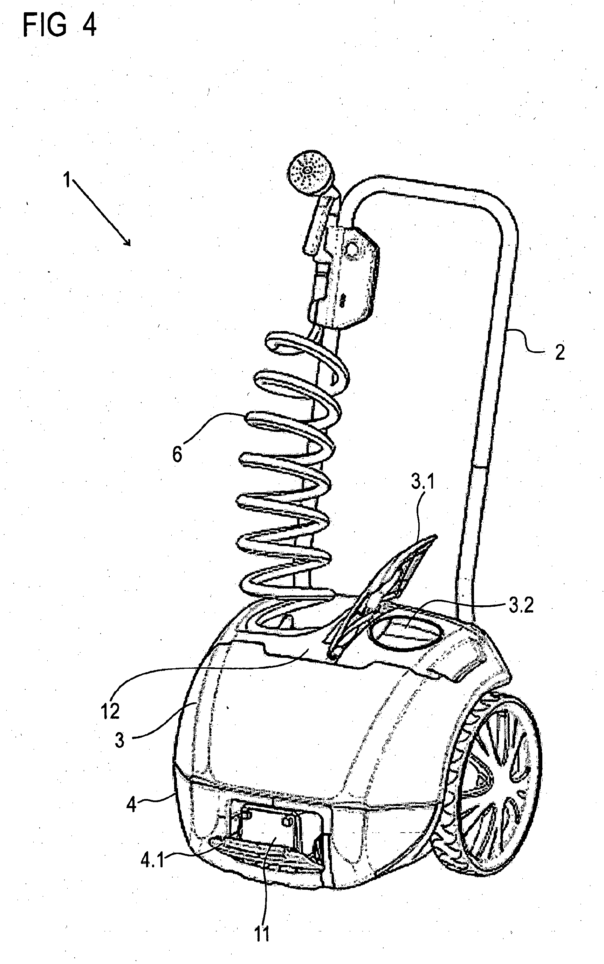

Die **Figur 4** zeigt eine modifizierte Ausführungsform der erfindungsgemäßen Vorrichtung zum Transportieren und Ausbringen von Flüssigkeit aus Figur 1 mit einem Behälter 3, der mit einem darunter liegenden Gehäuse 4 zu einer kompakten Einheit verbunden ist. Hier befindet sich an der Oberseite des Behälters 3 ein zusätzliches Einsatzteil 12, welches eine Aufbewahrungsmöglichkeit für den Spiralschlauch 6 bietet, und welches den Behälterdeckel 3.1 und die Behältereinfüllöffnung 3.2 enthält. Das Einsatzteil kann beispielweise als Spritzgussteil gefertigt werden. Vorteilhaft daran ist, dass eine glattere Oberfläche entsteht, die für eine bessere Optik nicht mehr weiter bearbeitet, zum Beispiel lackiert, werden muss. An der Vorderseite des Gehäuses 4 befindet sich der Gehäusedeckel 4.1 mit dahinter liegendem Akku 11.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente zu bewirken. Insbesondere erscheinen die nachfolgend beschriebenen Merkmalskombinationen als besonders günstig:
I. Vorrichtung (1) zum Transportieren und Ausbringen von Flüssigkeit, insbesondere von Wasser zum Gießen, aufweisend:
   a. einen Behälter (3) zur Aufnahme der Flüssigkeit,
   b. ein Gehäuse (4), welches zumindest eine elektrische Pumpe (10) und eine Speichereinheit für Elektrizität (11) aufnimmt,
   c. zwei tragende koaxial angeordnete Laufräder (5), und
   d. eine Griffeinheit (2) zum Schieben und Ziehen der Vorrichtung, wobei
   e. Behälter (3) und Gehäuse (4) eine kompakte Raumeinheit bilden und
   f. die Griffeinheit (2) die Kontur der Rückseite und der Unterseite dieser Raumeinheit umfasst, indem sie sich an die Kontur der Raumeinheit auf zwei Seiten anschmiegt.
II. Vorrichtung gemäß der Merkmalskombination I, wobei der Behälter (3) oberhalb des Gehäuses (4) angeordnet ist.
III. Vorrichtung gemäß der Merkmalskombination II, wobei der Behälter (3) das Gehäuse (4) nach oben hin vollständig abdeckt.
IV. Vorrichtung gemäß einer der Merkmalskombinationen I bis III, wobei die koaxiale Achse (5.1) der Laufräder (5) tiefer als der Schwerpunkt der Raumeinheit im gefüllten Zustand des Behälters (3) angeordnet ist.
V. Vorrichtung gemäß einer der Merkmalskombinationen I bis IV, wobei die koaxiale Achse (5.1) der Laufräder (5) zwischen dem Lot des Schwerpunktes der Raumeinheit im gefüllten Zustand des Behälters (3) und der Rückseite der Raumeinheit angeordnet ist.
VI. Vorrichtung gemäß einer der Merkmalskombinationen I bis V, wobei die Laufräder (5) einen solchen Radius aufweisen und die Ausdehnung der Raumeinheit derart gestaltet ist, dass sich der Schwerpunkt der Raumeinheit im gefüllten Zustand des Behälters (3) in einem Abstand von der koaxialen Achse (5.1) der Laufräder (5) befindet, der maximal dem zweifachen Radius, vorzugsweise dem 1,5-fachen Radius, entspricht.
VII. Vorrichtung gemäß einer der Merkmalskombinationen I bis VI, wobei die Raumeinheit eine Gesamthöhe ohne Griffeinheit aufweist, die das 4-fache, vorzugsweise das 3-fache, des Radius der Laufräder (5) nicht überschreitet.
VIII. Vorrichtung gemäß einer der Merkmalskombinationen I bis VII, wobei die Griffeinheit (2) ein Rohrgestänge aufweist.
IX. Vorrichtung gemäß einer der Merkmalskombinationen I bis VIII, wobei die Griffeinheit (2) zwei Holme aufweist.
X. Vorrichtung gemäß einer der Merkmalskombinationen I bis IX, wobei die Griffeinheit (2) einklappbar ausgebildet ist.
XI. Vorrichtung gemäß Merkmalskombination I bis X, wobei die Griffeinheit (2) teleskopierbar ausgebildet ist.
XII. Vorrichtung gemäß einer der Merkmalskombinationen I bis XI, wobei die Griffeinheit (2) eine Halterung (8) für eine Gießbrause oder einen Gießbrausestab aufweist.
XIII. Vorrichtung gemäß einer der Merkmalskombinationen I bis XII, wobei an der Griffeinheit (2) ein Schalter (9) für die Pumpe (10) angebracht ist.
XIV. Vorrichtung gemäß einer der Merkmalskombinationen I bis XIII, wobei die Pumpe (10) eine Flüssigkeitspumpe ist.
XV. Vorrichtung gemäß einer der Merkmalskombinationen I bis XIII, wobei die Pumpe (10) eine Luftpumpe ist.
XVI. Vorrichtung gemäß einer der Merkmalskombinationen I bis XV, wobei die Pumpe (10) als Saug- und Druckpumpe ausgebildet ist.
XVII. Vorrichtung gemäß einer der Merkmalskombinationen I bis XVI, wobei der Behälter (3) fest mit dem Gehäuse (4) verbunden ist.
XVIII. Vorrichtung gemäß einer der Merkmalskombinationen I bis XVI, wobei der Behälter (3) abnehmbar ausgebildet ist.
XIX. Vorrichtung gemäß einer der Merkmalskombinationen I bis XVIII, wobei der Behälter (3) aus einem Thermoplast besteht und durch Blastechnik hergestellt ist.
XX. Vorrichtung gemäß einer der Merkmalskombinationen I bis XVIII, wobei der Behälter (3) durch ein Rotationsverfahren hergestellt wird.
XXI. Vorrichtung gemäß einer der Merkmalskombinationen I bis XX, wobei das Gehäuse (4) aus einem Thermoplast besteht und durch Spritzgusstechnik hergestellt ist.
XXII. Vorrichtung gemäß einer der Merkmalskombinationen I bis XX, wobei das Gehäuse (4) aus einem Thermoplast besteht und durch Tiefziehtechnik hergestellt ist.
XXIII. Vorrichtung gemäß einer der Merkmalskombinationen I bis XXII, wobei die Speichereinheit für Elektrizität ein Akku (11) ist.
XXIV. Vorrichtung gemäß der Merkmalskombination XXIII, wobei ein Ladegerät für den Akku (11) integriert ist.
XXV. Vorrichtung gemäß der Merkmalskombination XXIII, wobei ein Anschluss für ein Ladegerät für den Akku (11) vorgesehen ist.
XXVI. Vorrichtung gemäß einer der Merkmalskombinationen XXIII und XXIV, wobei eine Brennstoffzelle vorgesehen ist, welche den Akku (11) bei Bedarf auflädt.
XXVII. Vorrichtung gemäß einer der Merkmalskombinationen XXIII und XXIV, wobei eine Solarzelle vorgesehen ist, welche den Akku (11) bei Bedarf auflädt.
XXVIII. Vorrichtung gemäß einer der Merkmalskombinationen I bis XXII, wobei die Speichereinheit für Elektrizität eine Brennstoffzelle ist.
XXIX. Vorrichtung gemäß einer der Merkmalskombinationen I bis XXVIII, wobei oberhalb des Behälters (3) ein Sitz vorgesehen ist.
XXX. Vorrichtung gemäß der Merkmalskombination XXIX, wobei der Behälter (3) auf der Oberseite als Sitzfläche ausgebildet ist.
XXXI. Vorrichtung gemäß der Merkmalskombination XXIX, wobei an der Griffeinheit (2) ein Sitz, vorzugsweise klappbar, angebracht ist.
XXXII. Vorrichtung gemäß einer der Merkmalskombinationen I bis XXXI, wobei die Laufräder (5) federnd gelagert sind und mit einer Reibbremse versehen sind, die im eingefederten Zustand wirkt.
XXXIII. Vorrichtung gemäß einer der Merkmalskombinationen I bis XXXII, wobei an der Griffeinheit (2) ein Netz oder Korb zur Aufnahme von Utensilien angebracht ist.
XXXIV. Vorrichtung gemäß einer der Merkmalskombinationen I und XXXIII, wobei das Gehäuse (4) einen Gehäusedeckel (4.1) aufweist, durch welcher die im Gehäuse (4) befindlichen Funktionselemente (10, 11) zugänglich sind.
XXXV. Vorrichtung gemäß einer der Merkmalskombinationen I bis XXXIV, wobei eine Dosiereinrichtung mit Vorratsbehälter vorgesehen ist, welche das geförderte Gießwasser automatisch beim Ausbringen mit einer Zusatzsubstanz (z.B. Düngemittel, Pflanzenschutzmittel) anreichert.
XXXVI. Vorrichtung gemäß einer der Merkmalskombinationen I bis XXXV, wobei die Dosiervorrichtung ein- und ausschaltbar ist.
XXXVII. Vorrichtung gemäß der Merkmalskombination XXXV und XXXVI, wobei die Dosiereinrichtung variabel bezüglich ihrer Abgabe an einstellbar ist.
XXXVIII. Vorrichtung gemäß einer der Merkmalskombinationen I bis XXXVII, wobei im Gehäuse (4) und im Behälter (3) Aussparungen für die Griffeinheit (2) vorgesehen sind.
XXXIX. Vorrichtung gemäß einer der Merkmalskombinationen I bis XXXVIII, wobei eine Elektronik im oberen Bereich der Griffeinheit (2) vorgesehen ist.
XL. Vorrichtung gemäß einer der Merkmalskombinationen I bis XXXIX, wobei die Elektronik eine Ladestandsanzeige aufweist.

## Patentansprüche

1. Vorrichtung (1) zum Transportieren und Ausbringen von Flüssigkeit, insbesondere von Wasser zum Gießen, aufweisend:
einen Behälter (3) zur Aufnahme der Flüssigkeit,
ein Gehäuse (4), welches zumindest eine elektrische Pumpe (10) und eine Speichereinheit für Elektrizität (11) aufnimmt,
zwei tragende koaxial angeordnete Laufräder (5) und
eine Griffeinheit (2) zum Schieben und Ziehen der Vorrichtung, wobei der Behälter (3) und das Gehäuse (4)
eine kompakte Raumeinheit bilden, **dadurch gekennzeichnet, dass**
die Griffeinheit (2) die Kontur der Rückseite und der Unterseite dieser Raumeinheit (3, 4) umfasst, indem sie sich an die Kontur der Raumeinheit auf zwei Seiten anschmiegt.

2. Vorrichtung gemäß dem voranstehenden Anspruch 1, **da-durch gekennzeichnet**, dass der Behälter (3) oberhalb des Gehäuses (4) angeordnet ist.

3. Vorrichtung gemäß dem voranstehenden Anspruch 2, **dadurch gekennzeichnet, dass** der Behälter (3) das Gehäuse (4) nach oben hin vollständig abdeckt.

4. Vorrichtung gemäß einem der voranstehenden Ansprüche 1 bis 3, **dadurch gekennzeichnet, dass** die koaxiale Achse (5.1) der Laufräder (5) tiefer als der Schwerpunkt der Raumeinheit im gefüllten Zustand des Behälters (3) angeordnet ist.

5. Vorrichtung gemäß einem der voranstehenden Ansprüche 1 bis 4, **dadurch gekennzeichnet, dass** die koaxiale Achse (5.1) der Laufräder (5) zwischen dem Lot des Schwerpunktes der Raumeinheit im gefüllten Zustand des Behälters (3) und der Rückseite der Raumeinheit angeordnet ist.

6. Vorrichtung gemäß einem der voranstehenden Ansprüche 1 bis 5, **dadurch gekennzeichnet, dass** die Laufräder (5) einen solchen Radius aufweisen und die Ausdehnung der Raumeinheit derart gestaltet ist, dass sich der Schwerpunkt der Raumeinheit im gefüllten Zustand des Behälters (3) in einem Abstand von der koaxialen Achse (5.1) der Laufräder (5) befindet, der maximal dem zweifachen Radius, vorzugsweise dem 1,5-fachen Radius, entspricht.

7. Vorrichtung gemäß einem der voranstehenden Ansprüche 1 bis 6, **dadurch gekennzeichnet, dass** die Raumeinheit eine Gesamthöhe ohne Griffeinheit aufweist, die das 4-fache, vorzugsweise das 3-fache, des Radius der Laufräder (5) nicht überschreitet.

8. Vorrichtung gemäß einem der voranstehenden Ansprüche 1 bis 7, **dadurch gekennzeichnet, dass** die Griffeinheit (2) ein Rohrgestänge aufweist.

9. Vorrichtung gemäß einem der voranstehenden Ansprüche 1 bis 8, **dadurch gekennzeichnet, dass** die Griffeinheit (2) zwei Holme aufweist.

10. Vorrichtung gemäß einem der voranstehenden Ansprüche 1 bis 9, **dadurch gekennzeichnet, dass** an der Griffeinheit (2) ein Schalter (9) für die Pumpe (10) angebracht ist.

11. Vorrichtung gemäß einem der voranstehenden Ansprüche 1 bis 10, **dadurch gekennzeichnet, dass** ein Ladegerät für den Akku (11) integriert ist.

12. Vorrichtung gemäß einem der voranstehenden Ansprüche 1 bis 11, **dadurch gekennzeichnet, dass** das Gehäuse (4) einen Gehäusedeckel (4.1) aufweist, durch welchen die im Gehäuse (4) befindlichen Funktionselemente zugänglich sind.

13. Vorrichtung gemäß einem der voranstehenden Ansprüche 1 bis 12, **dadurch gekennzeichnet, dass** eine Dosiereinrichtung mit Vorratsbehälter vorgesehen ist, welche das geförderte Gießwasser automatisch beim Ausbringen mit einer Zusatzsubstanz (z.B. Düngemittel, Pflanzenschutzmittel) anreichert.

14. Vorrichtung gemäß einem der voranstehenden Ansprüche 1 bis 13, **dadurch gekennzeichnet, dass** im Gehäuse (4) und im Behälter (3) Aussparungen für die Griffeinheit (2) vorgesehen sind.

15. Vorrichtung gemäß einem der voranstehenden Ansprüche 1 bis 14, **dadurch gekennzeichnet, dass** eine Elektronik mit Ladestandsanzeige des Akkus und Ladeanschluss im oberen Bereich der Griffeinheit (2) angeordnet ist.

## Claims

1. Device (1) for transporting and discharging liquid, in particular water for irrigation, having:
a container (3) for the accommodation of the liquid,
a housing (4) which accommodates at least one electric pump (10) and a storage unit for electricity (11),
two supporting running wheels (5) which are arranged coaxially and a grip unit (2) for pushing and pulling the device,
the container (3) and the housing (4) forming a compact spatial unit, **characterized in that** the grip unit (2) comprises the contour of the rear side and the lower side of said spatial unit (3, 4) **in that** said grip unit (2) fits closely against the contour of the spatial unit on two sides.

2. Device according to the preceding Claim 1, **characterized in that** the container (3) is located above the housing (4).

3. Device according to the preceding Claim 2, **characterized in that** the container (3) completely covers the housing (4) towards the top.

4. Device according to one of the preceding Claims 1 to 3, **characterized in that** the coaxial axle (5.1) of the running wheels (5) is located lower than the centre of gravity of the spatial unit in the filled state of the container (3).

5. Device according to one of the preceding Claims 1 to 4, **characterized in that** the coaxial axle (5.1) of the running wheels (5) is located between the perpendicular of the centre of gravity of the spatial unit in the filled state of the container (3) and the rear side of the spatial unit.

6. Device according to one of the preceding Claims 1 to 5, **characterized in that** the running wheels (5) have a radius and the extent of the spatial unit has a configuration such that the centre of gravity of the spatial unit in the filled state of the container (3) is situated at a distance from the coaxial axle (5.1) of the running wheels (5) corresponding at most to twice the radius, preferably to 1.5 times the radius.

7. Device according to one of the preceding Claims 1 to 6, **characterized in that** the spatial unit has an overall height, without the grip unit, which does not exceed four times, preferably three times, the radius of the running wheels (5).

8. Device according to one of the preceding Claims 1 to 7, **characterized in that** the grip unit (2) has a tubular linked structure.

9. Device according to one of the preceding Claims 1 to 8, **characterized in that** the grip unit (2) has two spars.

10. Device according to one of the preceding Claims 1 to 9, **characterized in that** a switch (9) for the pump (10) is attached to the grip unit (2).

11. Device according to one of the preceding Claims 1 to 10, **characterized in that** a charger for the rechargeable battery (11) is integrated.

12. Device according to one of the preceding Claims 1 to 11, **characterized in that** the housing (4) has a housing cover (4.1) through which the functional elements situated in the housing (4) are accessible.

13. Device according to one of the preceding Claims 1 to 12, **characterized in that** a dosing unit having a supply container is provided, said dosing unit automatically enriching the pumped irrigation water during discharging with an additional substance (e.g. fertilizer, plant protection product).

14. Device according to one of the preceding Claims 1 to 13, **characterized in that** recesses for the grip unit (2) are provided in the housing (4) and in the container (3).

15. Device according to one of the preceding Claims 1 to 14, **characterized in that** electronics having a charge level indicator for the rechargeable battery and a charger connection are provided in the upper region of the grip unit (2).

## Revendications

1. Dispositif (1) destiné au transport et à l'extraction de liquide, en particulier d'eau à déverser, présentant :
un récipient (3) pour recevoir le liquide,
un boîtier (4) qui reçoit au moins une pompe électrique (10) et une unité d'accumulation d'électricité (11),
deux rotors (S) porteurs disposés coaxialement et une unité de préhension (2) pour pousser et tirer le dispositif,
le récipient (3) et le boîtier (4) formant une unité structurelle compacte,
**caractérisé en ce que**
l'unité de préhension (2) englobe le contour du côté arrière et du côté inférieur de cette unité structurelle (3, 4) en épousant le contour de l'unité structurelle sur deux côtés.

2. Dispositif selon la revendication précédente 1, **caractérisé en ce que** le récipient (3) est disposé au-dessus du boîtier (4).

3. Dispositif selon la revendication précédente 2, **caractérisé en ce que** le récipient (3) recouvre complètement le boîtier (4) vers le haut.

4. Dispositif selon l'une quelconque des revendications précédentes 1 à 3, **caractérisé en ce que** l'axe coaxial (5.1) des rotors (5) est disposé plus bas que le centre de gravité de l'unité structurelle dans l'état rempli du récipient (3).

5. Dispositif selon l'une quelconque des revendications précédentes 1 à 4, **caractérisé en ce que** l'axe coaxial (5.1) des rotors (5) est disposé entre la verticale du centre de gravité de l'unité structurelle dans l'état rempli du récipient (3) et le côté arrière de l'unité structurelle.

6. Dispositif selon l'une quelconque des revendications précédentes 1 à 5, **caractérisé en ce que** les rotors (5) présentent un rayon tel, et l'étendue de l'unité structurelle est configurée de telle sorte, que le centre de gravité de l'unité structurelle, dans l'état rempli du récipient (3), se trouve à une distance de l'axe coaxial (5.1) des rotors (5) qui correspond au maximum au double du rayon, de préférence à 1,5 fois le rayon.

7. Dispositif selon l'une quelconque des revendications précédentes 1 à 6, **caractérisé en ce que** l'unité structurelle présente une hauteur totale sans l'unité de préhension qui ne dépasse pas 4 fois, de préférence 3 fois le rayon des rotors (5).

8. Dispositif selon l'une quelconque des revendications précédentes 1 à 7, **caractérisé en ce que** l'unité de préhension (2) présente une tringlerie tubulaire.

9. Dispositif selon l'une quelconque des revendications précédentes 1 à 8, **caractérisé en ce que** l'unité de préhension (2) présente deux longerons.

10. Dispositif selon l'une quelconque des revendications précédentes 1 à 9, **caractérisé en ce qu'**un commutateur (9) pour la pompe (10) est monté sur l'unité de préhension (2).

11. Dispositif selon l'une quelconque des revendications précédentes 1 à 10, **caractérisé en ce qu'**un appareil de charge pour l'accumulateur (11) est intégré.

12. Dispositif selon l'une quelconque des revendications précédentes 1 à 11, **caractérisé en ce que** le boîtier (4) présente un couvercle de boîtier (4.1) à travers lequel les éléments fonctionnels se trouvant dans le boîtier (4) peuvent être accessibles.

13. Dispositif selon l'une quelconque des revendications précédentes 1 à 12, **caractérisé en ce qu'**un dispositif de dosage avec un réservoir est prévu, lequel enrichit automatiquement l'eau refoulée à déverser lors de l'extraction avec une substance supplémentaire (par exemple un engrais, un produit phytosanitaire).

14. Dispositif selon l'une quelconque des revendications précédentes 1 à 13, **caractérisé en ce que** des évidements sont prévus dans le boîtier (4) et dans le récipient (3) pour l'unité de préhension (2).

15. Dispositif selon l'une quelconque des revendications précédentes 1 à 14, **caractérisé en ce qu'**une électronique avec un affichage d'état de charge de l'accumulateur et un raccord de charge est disposée dans la région supérieure de l'unité de préhension (2).
